# FASCICULE DE BREVET EUROPEEN

(11) **EP 2 311 715 B1**
(45) Date de publication et mention de la délivrance du brevet: **11.12.2013**
(21) Numéro de dépôt: 10013618.3
(22) Date de dépôt: 14.10.2010
(51) Int. Cl.: B62H 5/06

(54) **Dispositif et procédé de verrouillage automatique d'une colonne de direction**
Vorrichtung und Verfahren zur automatischen Verriegelung einer Lenksäule
Device and method for the automatic locking of a steering column

(30) Priorité: 16.10.2009 FR 0957293
(43) Date de publication de la demande: 20.04.2011
(73) Titulaire: LDL Technology, 31520 Ramonville Saint Agne (FR)
(72) Inventeur: Lefaure, Philippe, 31520 Ramonville Saint Agne (FR)
(74) Mandataire: Richebourg, Michel François

(56) Documents cités:
- JP-A- 61 261 171
- JP-A- 2000 072 063
- US-A1- 2006 238 296

## Description

### DOMAINE D'APPLICATION DE L'INVENTION

La présente invention a trait au domaine de l'électronique embarquée sur des véhicules au sens large (exemple : motocycle, bateau, machine BTP, etc...) et notamment aux adaptations permettant de réaliser un verrouillage de la direction de tels véhicules dans les meilleures conditions.

### DESCRIPTION DE L'ART ANTÉRIEUR

Il existe actuellement dans le secteur de l'automobile, des dispositifs antivols de verrouillage de la colonne de direction qui sont pilotés et asservis par des solutions électroniques.

Ces ensembles associant des caractéristiques mécaniques et électroniques sont très complexes et disposent en général d'un verrouillage multicrans qui fait qu'en position de stationnement c'est à dire une fois le dispositif de verrouillage activé, la colonne de direction peut être bloquée environ tous les cinq (5) degrés de mouvement de rotation de ladite colonne.

Ces systèmes sont difficiles à mettre en oeuvre sur des motocycles, car un défaut de verrouillage peut alors apparaître tous les cinq (5) degrés d'angle et bloquer ainsi la position du guidon, ce qui, sur un deux roues, se solde par un accident, quelle que soit la vitesse du véhicule. Un tel système est décrit dans US2006/0238296 où le pêne de verrouillage est mis en mouvement, quelle que soit la position du guidon, par un actionneur commandé par un sous-ensemble mains libres par liaison radio.

Pour résoudre ce problème lié à une application aux motocycles et bien que de nos jours l'électronique prenne une part considérable dans l'équipement des véhicules, les procédés et dispositifs existants ont été conçus pour requérir une action humaine dite active de pousser-tirer ou de rotation, pour libérer le verrou de colonne de son inter-blocage mécanique. Ce procédé présente plusieurs avantages et parmi ceux-ci :
- il garantit l'exécution de cette opération par l*'*utilisateur, obligé de procéder consciemment à cette manipulation pour pouvoir conduire le véhicule,
- les efforts nécessaires au déverrouillage ne requièrent pas d'énergie supplémentaire demandée à la batterie par un actionneur pour retirer ce verrou,
- l*'*action repose sur la logique et l*'*action seule du conducteur, et non pas sur une électronique programmée qui devrait garantir le caractère stable du déverrouillage lors des phases de conduite,
- etc...

Néanmoins, dans la mesure où le déverrouillage doit être réalisé par action *"*manuelle*"* sans nécessiter de phase d'identification, il est difficile de garantir que ledit déverrouillage soit réalisé par le bon utilisateur.

### DESCRIPTION DE L'INVENTION

Ce que constatant, la demanderesse a mené des recherches visant à proposer une solution complètement automatisée de blocage de colonne de direction notamment pour deux roues tout en assurant une sécurité d*'*utilisation maximale c*'*est à dire minimisant les conséquences induites par un défaut de commande électronique ou logiciel susceptible d*'*activer le blocage.

Ces recherches ont abouti à la conception et à la réalisation d*'*un dispositif et d*'*un procédé de travail correspondant associant des sous-ensembles mécaniques et électroniques particulièrement simples à mettre en oeuvre et répondant aux objectifs de l*'*invention.

Selon l*'*invention, le dispositif de verrouillage de la colonne de direction d*'*un motocycle comprenant un premier module solidaire de la colonne mobile en rotation et un deuxième module solidaire du cadre du véhicule fixe par rapport à ladite colonne,
ledit cadre limitant mécaniquement l*'*amplitude angulaire du mouvement de rotation de ladite colonne,
un module comprenant un pêne se projetant vers l*'*autre module,
l*'*autre module comprenant deux targettes se projetant vers l*'*autre module,
le pêne ou la paire de targettes étant susceptible de se mouvoir entre une position déployée pour créer un obstacle sur la course de déplacement angulaire de l*'*autre module à à des fins de verrouillage ou d*'*empêchement de déplacement de ce dernier et une position rétractée pour autoriser le déplacement de ce dernier,

ledit pêne ou la paire de targettes est mis en mouvement par un actionneur commandé par boîtier communicant avec un sous-ensemble mains libres par liaison filaire ou par liaison radio fréquence,
est remarquable en ce que
les deux targettes sont disposées aux deux extrémités de la course angulaire définie par ledit cadre, de façon à créer
une zone de fonctionnement sans verrouillage possible entre lesdites deux targettes,
une zone de verrouillage à chaque extrémité de la course angulaire définie par ledit cadre, zone de verrouillage définie par l*'*espace entre la targette et l*'*extrémité de la course angulaire,
de sorte que ledit pêne ne puisse atteindre l*'*extrémité de la course angulaire et la zone de verrouillage correspondante qu*'*en position rétractée du pêne ou des targettes,
et que le déploiement dudit pêne ou des targettes dans la zone de fonctionnement définie entre les deux targettes évite le passage dudit pêne dans la zone de verrouillage durant le fonctionnement normal du véhicule.

Cette caractéristique est particulièrement avantageuse en ce qu*'*elle évite la création d*'*un verrouillage multicrans et notamment les désavantages de ce dernier dans une application aux deux roues. En effet, ce procédé cantonne les zones de verrouillage aux extrémités de la plage angulaire du mouvement de rotation de la colonne et empêche l*'*accès à ces zones de verrouillage en fonctionnement normal.

Ainsi, en position rétractée commandée, le pêne ou les targettes autorise le déplacement de la colonne de direction sur la totalité de la plage angulaire. En effet, le retrait dudit pêne ou des targettes permet le passage d*'*une zone à l*'*autre en autorisant le passage du pêne malgré l*'*obstacle constitué par la gâche.

En position déployée de repos, le pêne ou les targettes empêche la colonne de direction de venir sur les zones angulaires correspondant au verrouillage ou bien empêche le déplacement de la colonne de direction sur la zone angulaire de fonctionnement. Étant donné que le fonctionnement du dispositif dépend de la position angulaire de la colonne de direction, le dispositif est équipé d*'*un capteur de la rotation de la colonne permettant de définir la zone dans laquelle se trouve le pêne.

Un tel dispositif permet d'envisager une automatisation du verrouillage sur un véhicule à deux roues conformément aux objectifs de l*'*invention. En effet, le verrouillage ne peut être réalisé que sur les extrémités de la course de la direction c'est à dire pour un deux-roues sur une phase d'arrêt ou de manoeuvre à très basse vitesse. Aussi, le déploiement défectueux du pêne n'a pas les effets négatifs d'un blocage potentiel de direction sur toute la plage angulaire.

Le retrait défectueux ne permet que de libérer le verrou et n*'*a pas pour conséquence une situation génératrice d*'*accident.

Afin de gérer cette automatisation, le dispositif de l'invention présente d'autres caractéristiques associées ou non, parmi celles-ci :
- le sous-ensemble mains libres est constitué par un boîtier regroupant des fonction d*'*identification et d*'*authentification de l*'*utilisateur porteur d'un badge ou d*'*un identifiant unique porté par l*'*utilisateur du véhicule, discutant avec le sous-ensemble pour procéder à l*'*identification de l*'*utilisateur via une liaison radio fréquence.
- il comporte un calculateur moteur qui, gérant le moteur du véhicule et autorisant ou pas le démarrage du moteur, communique avec le sous ensemble, ce dernier transmettant l*'*autorisation du démarrage du moteur via le calculateur, suite à l*'*authentification de l*'*identifiant unique par le sous-ensemble mains libres.
- il comporte un module alarme, qui détecte une tentative de vol du véhicule et qui communique avec le calculateur pour suspendre l*'*utilisation possible du moteur ou déclencher des alarmes visuelles et sonores du véhicule.
- il comporte un bouton de démarrage dont l*'*activation par l*'*utilisateur lance la procédure d*'*identification du porteur du badge, pour déverrouiller ou non la colonne de direction et lancer le moteur.
- il comporte un moyen de mesure de la vitesse dont l*'*information correspondant à une valeur proche d*'*un arrêt permet l*'*autorisation du déploiement du pêne ou des targettes.

L*'*utilisateur possède sur lui une carte électronique (ou un identifiant biométrique quelconque : empreintes digitales, iris,...) qui l*'*identifie ; éventuellement par transmission radio fréquence ; par le biais du calculateur embarqué sur véhicule qui autorisera ou non l*'*accès voire le démarrage dudit véhicule.

Un autre objet de l*'*invention est constitué par le procédé de travail d*'*un dispositif tel que décrit ci-dessus. Selon une caractéristique particulièrement avantageuse, un procédé de verrouillage consiste à suivre les étapes suivantes :
- détection appui long sur bouton de démarrage,
- mesure de la vitesse et si la vitesse proche de zéro,
- arrêt du moteur,
- détection du mouvement de la colonne de direction dans un temps limité après arrête du moteur,
- retrait pêne ou targettes,
- mesure du mouvement angulaire détecté et amplitude angulaire du mouvement de rotation détecté suffisant,
- déploiement pêne ou targettes.

Selon une autre caractéristique particulièrement avantageuse de l*'*invention, un procédé de déverrouillage consiste à suivre les étapes suivantes :
- détection appui court sur bouton de démarrage,
- identification de l*'*utilisateur,
- retrait pêne ou targettes au moins pour une durée limitée,
- détection du mouvement de la colonne de direction dans un temps limité après arrêt du moteur,
- mesure du mouvement angulaire détecté et amplitude angulaire du mouvement de rotation détecté suffisante,
- déploiement du pêne ou targettes pour limitation active de la zone déverrouillée,
- démarrage du moteur.

Cette automatisation permet de proposer un système global d*'*accès et de démarrage qui ne fait pas intervenir de clef mécanique.

Bien entendu, ce verrouillage et ce déverrouillage pourront également être réalisés de manière active par l*'*intervention de l*'*utilisateur, l*'*invention gardant son intérêt dans la diminution des conséquences d'une activation défectueuse du verrou. La condamnation par verrouillage de la colonne de direction proposée par l*'*invention peut être déclenchée de manière active (ce qui requiert l*'*intervention humaine, en générale par une action sur un bouton, ou une clef si la clef fait encore partie du dispositif), ou de manière passive (c'est-à-dire sans intervention humaine consciente, par exemple lors du simple éloignement du conducteur)

Les concepts fondamentaux de l*'*invention venant d*'*être exposés ci-dessus dans leur forme la plus élémentaire, d*'*autres détails et caractéristiques ressortiront plus clairement à la lecture de la description qui suit et en regard des dessins annexés, donnant à titre d*'*exemple non limitatif, plusieurs modes de réalisation d*'*un dispositif conforme à l*'*invention.

### BRÈVE DESCRIPTION DES DESSINS

La figure 1 est un dessin schématique d*'*une vue de dessus d*'*un mode de réalisation d*'*un dispositif de l*'*invention installé sur une motocyclette;
Les figures 2 à 5 illustrent les possibilités de mouvement et de verrouillage de la colonne de direction de la motocyclette;
La figure 6 est un schéma illustrant les différents sous-ensembles du dispositif ou de l*'*environnement du dispositif participant à son pilotage;
La figure 7 est un dessin schématique d*'*une vue de dessus d*'*un autre mode de réalisation d*'*un dispositif conformé à l*'*invention.

### DESCRIPTION DES MODES DE RÉALISATION PRÉFÉRÉS

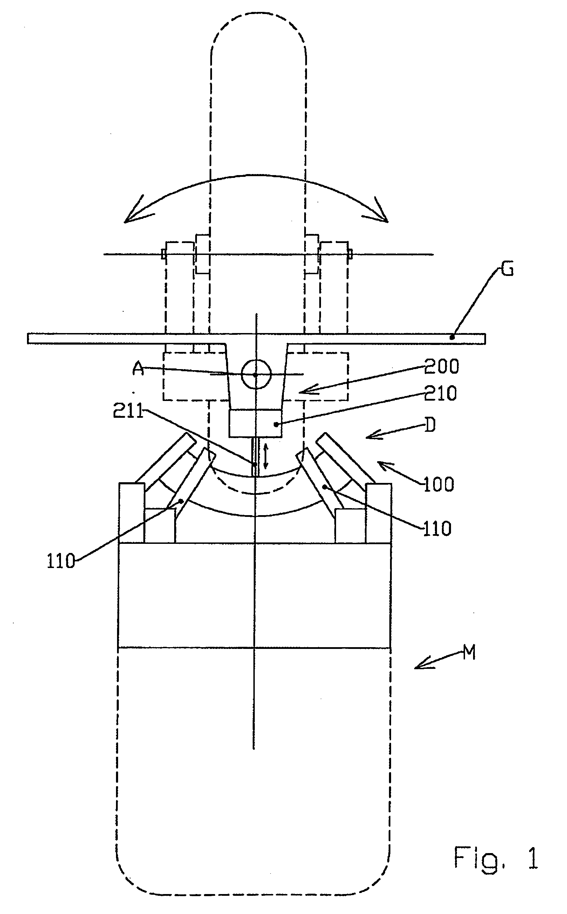

Tel qu*'*illustré sur le dessin de la figure 1, un dispositif de verrouillage conforme à l*'*invention et référencé D dans son ensemble équipe la colonne de direction d*'*une motocyclette M. L*'*axe de pivotement du guidon G est symbolisé par le point A.

Comme illustré, le dispositif D comprend un module fixe 100 solidaire du cadre de la motocyclette M et un module mobile 200 solidaire du guidon G. Ce module mobile 200 suit le mouvement de rotation du guidon G autour de l*'*axe A selon un angle de battement défini par les caractéristiques de construction de la motocyclette.

Conformément à l*'*invention, le module mobile 200 en rotation est équipé d*'*un actionneur 210 assurant selon un déplacement en translation perpendiculaire à l*'*axe A le déploiement ou le retrait d*'*un pêne de verrouillage 211. Ce pêne, selon qu*'*il soit déployé ou en retrait offre une surface d*'*appui à des butées ou targettes 110 solidaires de la partie fixe 100 à des fins de blocage mécanique du mouvement en rotation. Ainsi, lorsque ledit pêne 211 est en retrait la colonne de direction n'est soumise à aucune limitation alors que lorsqu*'*il est déployé, la colonne de direction et donc le guidon G voit son mouvement de rotation limité par la disposition desdites butées et de la position du pêne 211 au moment de son déploiement.

Conformément à l*'*invention, les butées ou targettes 110 sont disposées aux deux extrémités de la course angulaire du guidon G autour de l*'*axe A afin que le pêne ne bloque complètement la direction que lorsqu*'*il se situe à une de ces extrémités.

Dans la partie de course angulaire disposée entre les deux butées angulaires ou targettes 110, le pêne 211 peut se déployer sans que la direction ne soit bloquée. Un autre effet technique est que le déploiement du pêne dans cette zone empêche la colonne de direction et donc le module mobile de venir dans les zones de verrouillage du fait de la présence desdites butées ou targettes 110.

Ainsi, ces butées ou targettes 110 ont une double fonction. Une première fonction consiste à bloquer la colonne de direction une fois le pêne de verrouillage déployé dans la zone de verrouillage définie à chaque extrémités de course angulaire entre ladite extrémité et la targette. Une autre fonction consiste à empêcher ledit pêne à venir dans les zones de verrouillage une fois déployé dans l*'*espace angulaire séparant les deux butées 110.

Le fonctionnement du dispositif D de l*'*invention se fait sur la base d*'*un mode de réalisation préféré où le pêne est déployé en position repos et où il est rétracté par la commande d'un actionneur solidaire du module mobile 200.

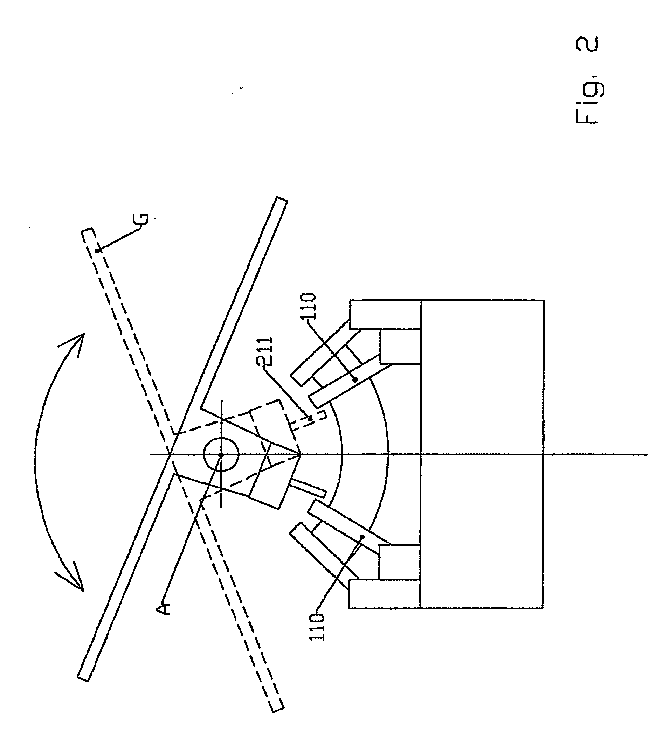

Comme illustré sur le dessin de la figure 2, le pêne 211 est déployé entre les deux butées ou targettes 110 et permet l*'*utilisation du guidon G selon la plage angulaire délimitée par lesdites butées 110.

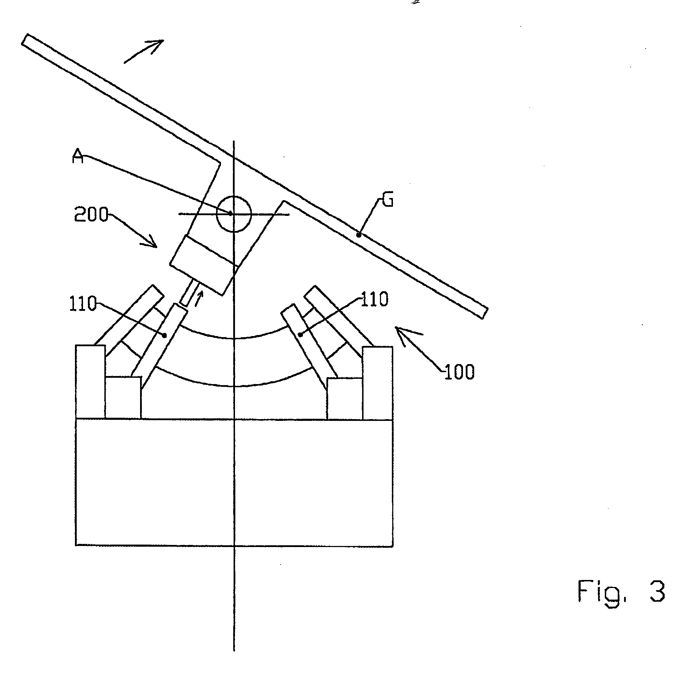

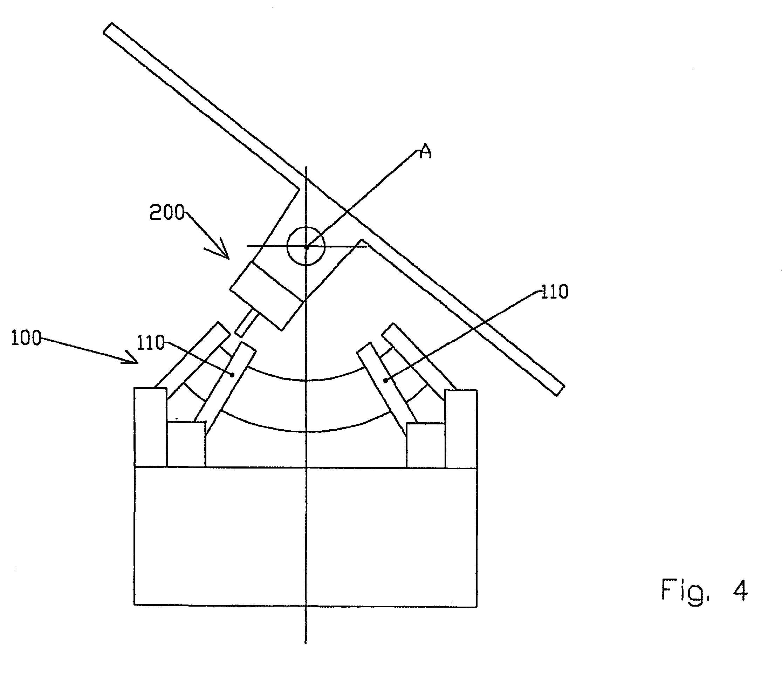

Afin de permettre le verrouillage de la colonne de direction, le module commandant le déplacement du pêne 211 est piloté pour rétracter ledit pêne 211 comme illustré sur le dessin de la figure 3 et permettre son passage dans une des deux zones de verrouillage situées aux extrémités de la plage angulaire de déplacement du guidon G comme illustré sur le dessin de la figure 4.

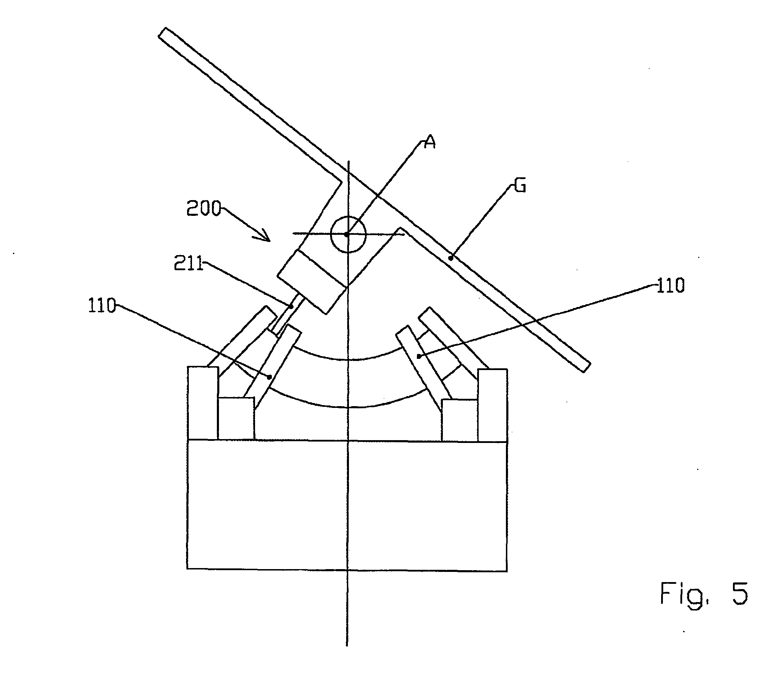

L*'*actionneur commandant le retrait est alors piloté pour autoriser le déploiement du pêne 211 et permettre sa saillie qui propose une surface d*'*appui contre la butée angulaire ou targette et qui bloque la direction entre l*'*extrémité de son battement angulaire et la butée 110 comme illustré par le dessin de la figure 5.

Seule la commande de la rétractation du pêne et la rotation du guidon permettront la libération de la direction.

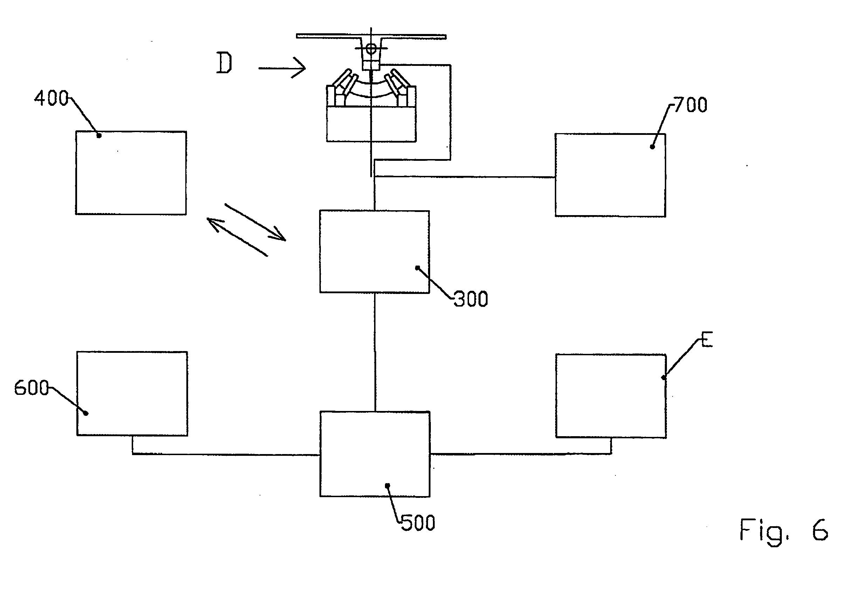

Comme illustré sur le dessin de la figure 6, le dispositif de commande du dispositif de verrouillage et d*'*allumage présente une pluralité de sous-ensembles, parmi ceux-ci :
- le dispositif de verrouillage D qui commande la mobilité du pêne à des fins de verrouillage et de déverrouillage de la colonne de direction;
- un sous-ensemble mains libres 300 communicant avec le dispositif D (l*'*intelligence du système de verrouillage peut être sur demande localisée dans le dispositif D ou dans le sous ensemble 300) par liaison filaire ou par liaison radio fréquence. Ce sous-ensemble mains libres 300 peut être constitué par un boîtier regroupant potentiellement des fonctions préexistantes comme la surveillance de la pression des pneus, l*'*identification et l*'*authentification de l*'*utilisateur porteur du badge ou identifiant unique;

- un identifiant unique 400 porté par l*'*utilisateur du véhicule, discutant avec le sous-ensemble 300 pour procéder à l*'*identification de l*'*utilisateur via une liaison radio fréquence;
- un calculateur moteur 500, qui gère le moteur E et donc autorise le démarrage du moteur. Ce calculateur communique avec le sous-ensemble 300, ce dernier transmettant l*'*autorisation du démarrage du moteur via le calculateur, suite à l*'*authentification de l*'*identifiant unique 400 par le sous-ensemble mains libres 300;
- un module Alarme optionnel 600, qui détecte une tentative de vol du véhicule et qui communique avec le calculateur pour suspendre l*'*utilisation possible du moteur. Le calculateur 500 peut aussi transmettre l*'*ordre au sous-ensemble 300 de déclencher des alarmes visuelles et sonores (clignotants, klaxon);
- un bouton de démarrage 700 qui peut être le bouton du démarreur standard, un appui sur ce bouton lance la procédure d'identification du porteur du badge, et au final a pour effet de déverrouiller la colonne de direction puis de lancer le moteur E.

De nombreuses stratégies d'utilisation de ce système paramétrable sont possibles, par exemple un premier appui simple sur le bouton 700 peut déverrouiller la colonne sans démarrer le moteur E (ce qui autorise des manoeuvres à la poussette pour déplacer le véhicule) et ensuite un nouvel appui lancera le moteur. De même, un appui plus ou moins long sera interprété différemment, et pourra soit déverrouiller la colonne, lancer le moteur E ou éteindre le moteur, ou reverrouiller la colonne, etc...

Le système global mécatronique effectuant le déverrouillage de la colonne de direction peut fonctionner selon la séquence suivante :
1 - appui court sur le bouton 700 de l*'*utilisateur pour lancer le processus d'identification de déverrouillage et enfin de démarrage,
2 - identification de l*'*utilisateur (Dialogue crypté entre le véhicule par l*'*intermédiaire du sous-ensemble 300 et l*'*utilisateur via l*'*identifiant unique 400 (badge, code frappé ou biométrie),
3 - un actuateur retire le verrou mécanique ou pêne 211 durant une temporisation définie,
4 - l*'*utilisateur tourne la direction de manière à sortir de la zone de condamnation,
5 - une fois sorti de cette zone (le sous ensemble est renseigné par un indicateur de rotation), l*'*actuateur relâche alors le pêne 211 qui évolue maintenant au repos dans une zone de rotation définie entre lesdites deux butées 110, (Ce dernier point peut être aussi garanti par l*'*utilisation d*'*un actuateur bi-stable qui garantit le non déplacement du verrou en cours de roulage.)
6 - le moteur peut être lancé.

Selon le mode de réalisation où la vitesse V du véhicule est mesurée, le système peut fonctionner de la façon suivante :
1 - appui long sur le bouton 700 et V = O
2 - Arrêt moteur,
3 - basculer guidon en position extrême dans une temporisation définie pêne rétracté,
4 - si position extrême atteinte alors pêne relâché et déployé.

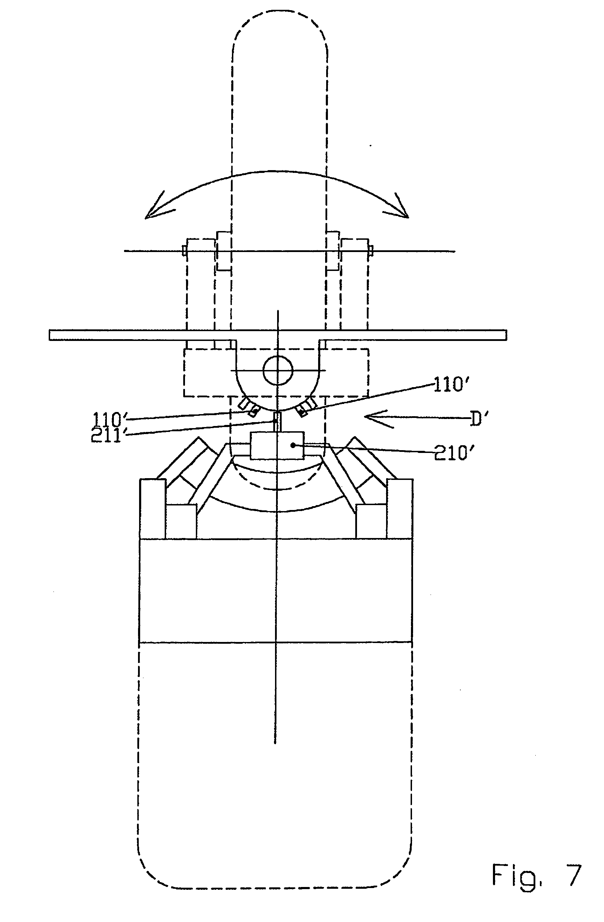

Un autre mode de réalisation d'un dispositif D' est illustré par le dessin de la figure 7 où le module fixé à la colonne de direction ne contient aucune électronique. Dans ce mode de réalisation, le boîtier 210ʹ commandant le déploiement et le retrait du pêne 211ʹ sont solidaires du cadre fixe alors que la colonne de direction mobile accueille les targettes fixes 110ʹ. Bien entendu, le reste du dispositif et du procédé restent identiques à ceux décrits plus haut.

On comprend que le procédé et le dispositif, qui viennent d'être ci-dessus décrits et représentés, l'ont été en vue d'une divulgation plutôt que d*'*une limitation. Bien entendu, divers aménagements, modifications et améliorations pourront être apportés à l*'*exemple ci-dessus, sans pour autant sortir du cadre de l*'*invention.

Ainsi par exemple, selon un autre mode de réalisation ce sont les targettes qui sont mobiles et dont le déploiement et le retrait sont gérés par l*'*électronique embarquée alors que le pêne reste fixe. De plus, le terme motocycle doit être compris comme englobant tout véhicule à guidon et notamment les motoneiges.

## Revendications

1. Dispositif de verrouillage (D) de la colonne de direction d'un motocycle (M) comprenant un premier module (200) solidaire de la colonne mobile en rotation et un deuxième module (100) solidaire du cadre du véhicule (M) fixe par rapport à ladite colonne,
ledit cadre limitant mécaniquement l'amplitude angulaire du mouvement de rotation de ladite colonne,
un module (200) comprenant un pêne (211) se projetant vers l'autre module (100),
l'autre module (100) comprenant deux targettes (110) se projetant vers l'autre module (200),
le pêne (211) ou la paire de targettes (110) étant susceptible de se mouvoir entre une position déployée pour créer un obstacle sur la course de déplacement angulaire de l'autre module à des fins de verrouillage ou d'empêchement de déplacement de ce dernier et une position rétractée pour autoriser le déplacement de ce dernier,
ledit pêne (211) ou la paire de targettes (110) est mis en mouvement par un actionneur commandé par boîtier communicant avec un sous-ensemble mains libres (300) par
liaison filaire ou par liaison radio fréquence,
**CARACTÉRISÉ PAR LE FAIT QUE**
les deux targettes (110) sont disposées aux deux extrémités de la course angulaire définie par ledit cadre, de façon à créer
une zone de fonctionnement sans verrouillage possible entre lesdites deux targettes (110),
une zone de verrouillage à chaque extrémité de la course angulaire définie par ledit cadre, zone de verrouillage définie par l'espace entre la targette (110) et l'extrémité de la course angulaire,
de sorte que ledit pêne (211) ne puisse atteindre l'extrémité de la course angulaire et la zone de verrouillage correspondante qu'en position rétractée du pêne (211) ou des targettes (110),
et que le déploiement dudit pêne (211) ou des targettes (110) dans la zone de fonctionnement définie entre les deux targettes (110) évite le passage dudit pêne (211) dans la zone de verrouillage durant le fonctionnement normal du véhicule.

2. Dispositif (D) selon la revendication 1, **CARACTÉRISÉ PAR LE FAIT QU'**il est équipé d'un capteur de la rotation de la colonne permettant de définir la zone dans laquelle se trouve le pêne (211).

3. Dispositif (D) selon la revendication 1, **CARACTÉRISÉ PAR LE FAIT QU'**il comporte un moyen de mesure de la vitesse dont l'information correspondant à une valeur proche d'un arrêt permet l'autorisation du déploiement du pêne (211) ou des targettes (110).

4. Dispositif (D) selon la revendication 2, **CARACTÉRISÉ PAR LE FAIT QUE** le sous-ensemble mains libres (300) est constitué par un boîtier regroupant des fonctions d'identification et d'authentification de l'utilisateur porteur d'un badge ou d'un identifiant unique (400) porté par l'utilisateur du véhicule, discutant avec le sous-ensemble pour procéder à l'identification de l'utilisateur via une liaison radio fréquence.

5. Dispositif (D) selon la revendication 4, **CARACTÉRISÉ PAR LE FAIT QU'**il comporte un calculateur moteur (500) qui, gérant le moteur du véhicule (M) et autorisant ou pas le démarrage du moteur, communique avec le sous-ensemble (300), ce dernier transmettant l'autorisation du démarrage du moteur via le calculateur, suite à l'authentification de l'identifiant unique (400) par le sous ensemble mains libres.

6. Dispositif (D) selon la revendication 4, **CARACTÉRISÉ PAR LE FAIT QU'**il comporte un bouton de démarrage (700) dont l'activation par l'utilisateur lance la procédure d'identification du porteur du badge, pour déverrouiller ou non la colonne de direction et lancer le moteur.

7. Procédé de travail d'un dispositif (D) selon les revendications 1 à 6 prises ensembles, **CARACTÉRISÉ EN CE QU'**il consiste à suivre les étapes suivantes :
- détection appui long sur bouton de démarrage (700),
- mesure de la vitesse et si la vitesse proche de zéro,
- arrêt du moteur,
- détection du mouvement de la colonne de direction dans un temps limité après arrête du moteur,
- retrait pêne (211) ou targettes (110),
- mesure du mouvement angulaire détecté et amplitude angulaire du mouvement de rotation détecté suffisant,
- déploiement pêne (211) ou targettes (110).

8. Procédé de travail d'un dispositif (D) selon les revendications 1 à 6 prises ensembles, **CARACTÉRISÉ EN CE QU'** il consiste à suivre les étapes suivantes :
- détection appui court sur bouton de démarrage (700),
- identification de l'utilisateur,
- retrait pêne (211) ou targettes (110) au moins pour une durée limitée,
- détection du mouvement de la colonne de direction dans un temps limité après arrêt du moteur,
- mesure du mouvement angulaire détecté et amplitude angulaire du mouvement de rotation détecté suffisante,
- déploiement pêne (211) ou targettes (110),
- démarrage du moteur.

## Patentansprüche

1. Vorrichtung zum Sperren (D) der Lenksäule eines Motorrads (M), umfassend ein erstes Modul (200), das mit der Säule drehbeweglich fest verbunden ist, und ein zweites Modul (100), das mit dem Rahmen des Fahrzeugs (M) fest verbunden ist, der im Verhältnis zu der Säule feststeht,
wobei der Rahmen die Winkelamplitude der Drehbewegung der Säule mechanisch einschränkt,
wobei ein Modul (200) einen Riegel (211) umfasst, der sich zu dem anderen Modul (100) hin erstreckt,
wobei das andere Modul (100) zwei Schieber (110) umfasst, die sich zu dem anderen Modul (200) hin erstrecken,
wobei der Riegel (211) oder das Schieberpaar (110) in der Lage ist, sich zwischen einer ausgefahrenen Position, um auf dem Winkelverschiebungsweg des anderen Moduls zum Zweck des Sperrens oder Verhinderns einer Verschiebung desselben eine Behinderung zu schaffen, und einer eingezogenen Position, um die Verschiebung desselben zuzulassen, zu bewegen,
wobei der Riegel (211) oder das Schieberpaar (110) durch ein Stellglied in Bewegung gebracht wird, das von einem Steuergerät gesteuert wird, das mit einer Freisprechanlage (300) über eine drahtgebundene Verbindung oder über eine Radiofrequenzverbindung kommuniziert,
**dadurch gekennzeichnet, dass** die beiden Schieber (110) an den beiden Enden des Winkelweges, der durch den Rahmen definiert wird, angeordnet sind, um Folgendes zu bilden:
eine Funktionszone ohne mögliche Sperrung zwischen den beiden Schiebern (110),
eine Sperrzone an jedem Ende des Winkelweges, der durch den Rahmen definiert wird, wobei die Sperrzone durch den Raum zwischen dem Schieber (110) und dem Ende des Winkelweges definiert wird,
so dass der Riegel (211) das Ende des Winkelweges und die entsprechende Sperrzone nur in der eingezogenen Position des Riegels (211) oder der Schieber (110) erreichen kann,
und dass das Ausfahren des Riegels (211) oder der Schieber (110) in der Funktionszone, die zwischen den beiden Schiebern (110) definiert wird, den Durchgang des Riegels (211) in die Sperrzone während des normalen Betriebs des Fahrzeugs vermeidet.

2. Vorrichtung (D) nach Anspruch 1, **dadurch gekennzeichnet, dass** sie mit einem Sensor der Drehung der Säule ausgestattet ist, der es ermöglicht, die Zone zu definieren, in der sich der Riegel (211) befindet.

3. Vorrichtung (D) nach Anspruch 1, **dadurch gekennzeichnet, dass** sie ein Mittel zum Messen der Geschwindigkeit umfasst, dessen Information, die einem Wert entspricht, der fast ein Stillstand ist, das Zulassen des Ausfahrens des Riegels (211) oder der Schieber (110) ermöglicht.

4. Vorrichtung (D) nach Anspruch 2, **dadurch gekennzeichnet, dass** die Freisprechanlage (300) aus einem Steuergerät besteht, das Funktionen zur Identifizierung und Authentifizierung des Benutzers zusammenfasst, der einen Ausweis oder eine einzigartige Identifizierung (400) trägt, der bzw. die von dem Benutzer des Fahrzeugs getragen wird, der mit der Anlage spricht, um die Identifizierung des Benutzers über eine Radiofrequenzverbindung vorzunehmen.

5. Vorrichtung (D) nach Anspruch 4, **dadurch gekennzeichnet, dass** sie einen Motorrechner (500) umfasst, der, indem er den Motor des Fahrzeugs (M) verwaltet und das Starten des Motors genehmigt oder nicht, mit der Anlage (300) kommuniziert, wobei diese die Genehmigung zum Starten des Motors über den Rechner überträgt, im Anschluss an die Authentifizierung der einzigartigen Identifizierung (400) durch die Freisprechanlage.

6. Vorrichtung (D) nach Anspruch 4, **dadurch gekennzeichnet, dass** sie eine Starttaste (700) umfasst, deren Aktivierung durch den Benutzer den Vorgang der Identifizierung des Ausweisträgers startet, um die Lenksäule zu entsperren oder nicht, und um den Motor zu starten.

7. Arbeitsverfahren einer Vorrichtung (D) nach Anspruch 1 bis 6 zusammengenommen, **dadurch gekennzeichnet, dass** es darin besteht, die folgenden Schritte zu befolgen:
- Erkennen eines langen Drückens der Starttaste (700),
- Messen der Geschwindigkeit, und wenn die Geschwindigkeit fast gleich Null ist,
- Anhalten des Motors,
- Erkennen der Bewegung der Lenksäule innerhalb einer begrenzten Zeit nach dem Anhalten des Motors,
- Zurückziehen des Riegels (211) oder der Schieber (110),
- Messen der erkannten Winkelbewegung und der Winkelamplitude der ausreichenden erkannten Drehbewegung,
- Ausfahren des Riegels (211) oder der Schieber (110) .

8. Arbeitsverfahren einer Vorrichtung (D) nach Anspruch 1 bis 6 zusammengenommen, **dadurch gekennzeichnet, dass** es darin besteht, die folgenden Schritte zu befolgen:
- Erkennen eines kurzen Drückens der Starttaste (700),
- Identifizieren des Benutzers,
- Zurückziehen des Riegels (211) oder der Schieber (110) mindestens für eine begrenzte Dauer,
- Erkennen der Bewegung der Lenksäule in einer begrenzten Zeit nach dem Anhalten des Motors,
- Messen der erkannten Winkelbewegung und der Winkelamplitude der ausreichenden erkannten Drehbewegung,
- Ausfahren des Riegels (211) oder der Schieber (110),
- Starten des Motors.

## Claims

1. Device for locking (D) the steering column of a motorcycle (M), which includes a first module (200) secured to the rotating column and a second module (100) secured to the frame of the vehicle (M), which is stationary with respect to said column,
said frame mechanically limiting the angular amplitude of rotation of said column,
a module (200) including a locking bolt (211) projecting toward the other module (100),
the other module (100) including two flat bolts (110) projecting toward the other module (200),
the locking bolt (211) or the pair of flat bolts (110) capable of moving between a deployed position so as to create an obstacle over the course of angular movement of the other module for the purpose of locking or prevent the movement of the latter and a retracted position so as to allow the latter to move,
said locking bolt (211) or the pair of flat bolts (110) is caused to move by an actuator controlled by a unit communicating with a hands-free subassembly (300) by a wire connection or by a radiofrequency connection,
**characterized in that**:
the two flat bolts (110) are arranged at the two ends of the angular course defined by said frame, so as to create:
an area of operation without possible locking between said two flat bolts (110),
a locking area at each end of the angular course defined by said frame, in which the locking area is defined by the space between the flat bolt (110) and the end of the angular course,
so that said locking bolt (211) can reach the end of the angular course and the corresponding locking area only in the retracted position of the locking bolt (211) or the flat bolts (110),
and the deployment of said locking bolt (211) or the flat bolts (110) in the area of operation defined between the two flat bolts (110) prevents said locking bolt (211) from passing into the locking area during normal operation of the vehicle.

2. Device (D) according to claim 1, **characterized in that** it is equipped with a sensor for rotation of the column enabling the area where the locking bolt (211) is located to be defined.

3. Device (D) according to claim 1, **characterized in that** it comprises means for measuring the speed, in which the information corresponding to a value close to a stop enables the deployment of the locking bolt (211) or the flat bolts (110) to be authorized.

4. Device (D) according to claim 2, **characterized in that** the hands-free subassembly (300) consists of a unit combining functions of identification and authentication of the user wearing a badge or a unique identifier (400) worn by the user of the vehicle, communicating with the subassembly in order to identify the user via a radiofrequency connection.

5. Device (D) according to claim 4, **characterized in that** it comprises an engine computer (500) that, managing the engine of the vehicle (M) and allowing or not allowing the engine to be started, communicates with the subassembly (300), which transmits the authorization to start the engine via the computer, after authentication of the unique identifier (400) by the hands-free subassembly.

6. Device (D) according to claim 4, **characterized in that** it comprises a start button (700) of which the activation by the user starts the procedure of identification of the badge wearer, so as to unlock the steering column or not and start the engine.

7. Process of operation of a device (D), according to claims 1 to 6 taken together, **characterized in that** it consists of the following steps:
- detection of a long pressing action applied to the start button (700),
- measurement of the speed, and whether the speed is close to zero,
- stopping of the engine,
- detection of the movement of the steering column within a limited time after the engine has been stopped,
- retraction of the locking bolt (211) or flat bolts (110),
- measurement of the detected angular movement and detected angular amplitude of rotation determined to be sufficient,
- deployment of the locking bolt (211) or flat bolts (110) .

8. Process of operation of a device (D), according to claims 1 to 6 taken together, **characterized in that** it consists of the following steps:
- detection of a brief pressing action applied to the start button (700),
- identification of the user,
- retraction of the locking bolt (211) or flat bolts (110) at least for a limited time,
- detection of the movement of the steering column within a limited time after the engine has been stopped,
- measurement of the detected angular movement and detected angular amplitude of rotation determined to be sufficient,
- deployment of the locking bolt (211) or flat bolts (110),
- starting of the engine.
